# EUROPEAN PATENT APPLICATION

(11) **EP 0 898 318 A2**
(43) Date of publication of application: **24.02.1999**
(21) Application number: 98306050.0
(22) Date of filing: 29.07.1998
(51) Int. Cl.: H01M 4/92, C25B 11/12, C25B 11/04, C01G 55/00

(54) **Method for producing electrode catalyst powder**

(30) Priority: 01.08.1997 JP 207973/97
(71) Applicant: Matsushita Electric Industrial Co., Ltd., Kadoma-shi, Osaka-fu, 571-8501 (JP)
(72) Inventor: Yasumoto, Eiichi, Katano City 576-0021 (JP); Gyoten, Hisaaki, Shijonawate City 575-0013 (JP); Hatoh, Kazuhito, Daitou City 574-0076 (JP); Niikura, Junji, Hirakata City 573-0157 (JP); Gamou, Takaharu, Fujiidera City 583-0026 (JP); Ito, Nobuhisa, Otsu-City 520-0865 (JP)
(74) Representative: Nachshen, Neil Jacob

(57) **Abstract**

A method for producing electrode catalyst powder is disclosed, whereby the production of the electrode catalyst powder carrying fine platinum particles in a high efficiency and a large quantity is enabled. According to this method, after preparing a colloidal solution by adding an oxidizing agent to an aqueous solution of platinum complex compound and adjusting the pH value of the colloidal solution to not less than 6, the colloidal particles are deposited on an electrically-conductive carbon powder.

## Description

### BACKGROUND OF THE INVENTION

The present invention relates to a method for producing electrode catalyst powder for use in a phosphoric acid fuel cell, a polymer electrolyte fuel cell and the like.

For the fuel cells, there have been widely used electrode catalyst powders prepared by permitting an electrically-conductive carbon powder to carry fine particles of platinum or both fine particles of platinum and ruthenium thereon.

If the particle diameter of the platinum particles to be carried on the carbon powder is large, such fuel cell can not demonstrate a satisfactory performance. It is therefore very important to prepare fine platinum particles and to make them be carried on the carbon powder.

A method for producing such electrode catalyst powder is proposed in, for instance, Japanese Examined Patent Publication No. Sho 61-1869. In the publication, there is proposed a method in which an oxidizing agent such as hydrogen peroxide, which does not produce a complex with platinum, is added to an aqueous solution of a platinum complex compound containing an oxidizable ligand thereby to oxidize the ligand in the platinum complex compound and to prepare a colloidal solution of the oxidized product, then an electrically-conductive carbon powder is immersed into the colloidal solution thereby to deposit the colloidal particles on the carbon powder.

In a case of employing chloroplatinic acid which is widely used as the platinum complex compound for the above-mentioned method, there is however a need for lowering the platinum concentration in the complex compound aqueous solution and another need for strictly controlling the pH value of the aqueous solution, because a chlorine-containing aqueous solution demonstrates strong acidity, and the desired colloidal particles, i.e., colloidal particles of the platinum complex compound with the oxidized ligand cannot sometimes be formed.

However, when the platinum concentration of the aqueous solution is low, the amount of the electrode catalyst powder obtainable from the aqueous solution is very small, and thus it is impossible to prepare the electrode catalyst powder efficiently. For that reason, large-scale manufacturing equipment has conventionally been required in order to prepare the electrode catalyst powder in large quantity.

An aim of the present invention is to provide a method for producing an electrode catalyst powder carrying very fine platinum particles in a high efficiency and in a large quantity.

### SUMMARY OF THE INVENTION

The present invention relates to a method for producing an electrode catalyst powder comprising the steps of:
adding an oxidizing agent to an aqueous solution of platinum complex compound, thereby to form a colloidal solution of an oxide of the platinum complex compound;
adjusting pH value of the colloidal solution to not less than 6; and
depositing said colloidal particles on an electrically-conductive carbon powder.

Another method for producing an electrode catalyst powder in accordance with the present invention comprises the steps of:
adding an oxidizing agent to an aqueous solution of platinum complex compound, thereby to form a colloidal solution of an oxide of the platinum complex compound;
adjusting pH value of the colloidal solution to not less than 6;
adding an aqueous solution of ruthenium chloride to the colloidal solution, thereby to form colloidal particles of ruthenium in said colloidal solution; and
depositing the colloidal particles of the oxide of the platinum complex compound and the colloidal particles of ruthenium on an electrically-conductive carbon powder.

There are two kinds of the electrode catalyst powders to be prepared in accordance with the present invention, i.e., one being the electrically-conductive carbon powder on which platinum particles are carried and the other being the electrically-conductive carbon powder on which both of the platinum particles and ruthenium particles are carried.

In either one of the above-mentioned methods for preparing the electrode catalyst powder, the pH value of the colloidal solution should be adjusted to not less than 6, and more preferably to make it alkaline, in advance of depositing the colloidal particles on the electrically-conductive carbon powder, in order to make the platinum particles to be carried on the electrically-conductive carbon powder finer. For that reason, it is preferable to add the electrically-conductive carbon powder to the colloidal solution after adjusting the pH value of the colloidal solution.

When the pH value of the colloidal solution is low, a large amount of platinic/platinous ions can be contained in the colloidal solution and a small amount of colloidal particles are formed. In addition, if chlorine is existing in the colloidal solution, the desired colloidal particles are not formed but H₂PtCl₆ is deposited instead.

In a case of forming the colloidal particles by oxidizing the platinum complex compound in the solution, the surface potential of the obtained colloidal particles is nearly neutral. In that state, the repulsion forces between the colloidal particles are therefore weak, and thus the colloidal particles are liable to aggregate to form secondary particles. Since the surface potential of the colloidal particles is proportional to the pH value of the colloidal solution, it is possible to prevent the aggregation of the colloidal particles by increasing the pH value of the colloidal solution so as to increase the surface potential of the colloidal particles. In particular, when the pH value is increased up to 6 or more, the colloidal particles can not aggregate each other, and thus the electrode catalyst carrying the fine platinum particles can be obtained.

In a case of raising the concentration of the platinum complex compound aqueous solution in order to increase the amount of the formed colloidal particles, it is preferable to make the colloidal solution alkaline.

Although the pH value of the dispersion may be adjusted up to about 13 as the upper limit, it is desirable to adjust the pH value to not more than 10 in the practical use.

Within this range, it is possible to prepare a preferable electrode catalyst powder even if the platinum concentration of the aqueous solution is high.

As an oxidizing agent for oxidizing the platinum complex compound, any oxidizing agent may be used as far as it does not introduce any group capable of forming a strong complex ligand with the platinum. For example, hydrogen peroxide, potassium permanganate, a persulfate salt and the like can be employed as the oxidizing agent.

As the electrically-conductive carbon powder to carry the colloidal particles thereon, a powder of any electrically-conductive carbon having a large surface area can be used. For example, acetylene black may also be employed.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

FIG. 1 is a current-voltage characteristic diagram of a polymer electrolyte fuel cell employing a platinum-carrying carbon catalyst powder in an embodiment of the present invention.

FIG. 2 is a current-voltage characteristic diagram of a polymer electrolyte fuel cell employing a platinum and ruthenium-carrying carbon catalyst powder in another embodiment of the present invention.

### DETAILED DESCRIPTION OF THE INVENTION

In the following paragraphs, preferred embodiments of the present invention will be described in detail.

### EXAMPLE 1

An aqueous solution of a platinum complex compound was prepared by dissolving 28 g of sodium hydrogensulfite in 0.4 liters of an aqueous solution of chloroplatinic acid having a platinum concentration of 5 g/liter. The pH value of the obtained platinum complex compound aqueous solution was found to be about 2. The platinum complex compound aqueous solution was then diluted with water to give a total quantity of 1.5 liters. Thereafter, 0.2 liters of 31% aqueous solution of hydrogen peroxide was dropped into the platinum complex compound aqueous solution, thereby to form a colloidal solution of platinum oxide. Subsequently, the pH value of the colloidal solution was adjusted to 7 by adding an aqueous solution of sodium hydroxide.

Separate from this, a carbon dispersion was prepared by dispersing 5 g of carbon powder (DENKA acetylene black, available from Denki Kagaku Kogyo Kabushiki Kaisha, Japan) in 0.3 liters of water. The obtained carbon dispersion and the pH-adjusted colloidal solution was mixed each other, thereby to deposit the colloidal particles of platinum oxide onto the carbon powder.

Then, the pH value of the mixture was adjusted to 5 by adding a diluted sulfuric acid, and the mixture was boiled by heating while stirring for 3 hours. As a result of this treatment, the colloidal particles were sufficiently carried on the carbon powder. After washing the powder obtained by filtering the heat-treated mixture, it was dried at 100°C for 24 hours, thereby to give a platinum-carrying carbon catalyst powder (hereinafter, referred to as "Powder No. 1").

The amount of the platinum carried on Powder No. 1 thus obtained was found to be 26 wt%. A measurement of the particle diameter of the platinum catalyst carried by Powder No. 1 conducted in accordance with the CO adsorption method resulted in 10 - 20 Å.

Another catalyst powder (hereinafter, referred to as "Powder No. 2") was prepared in a manner similar to the above-mentioned except for using a colloidal solution whose pH value had been adjusted to 5 after the formation of the colloidal particles. In this process, the colloidal solution turned turbid when its pH value was adjusted to 5.

The amount of the platinum carried on Powder No. 2 thus obtained was found to be 18 wt%. The particle diameter of the platinum catalyst carried on Powder No. 2 was found to be 80 - 100 Å.

Single cells of the polymer electrolyte fuel cell were assembled by employing the obtained Powders No. 1 and No. 2, respectively, and their performances were examined in the following manner.

An electrode was produced by dispersing Powder No. 1 in an organic solvent and applying the obtained dispersion on a carbon paper with an area of 5 cm². The amount of the applied catalyst powder per 1 cm² of the electrode area was 0.5 mg.

A polymer electrolyte fuel cell (single cell) was assembled by sandwiching a polymer electrolyte film, available from E. I. Du Pont de Nemours & Company under the trademark "Nafion" with a pair of the obtained electrodes. By supplying hydrogen to the one electrode and air to the other electrode, a current-voltage characteristic of the fuel cell was examined.

In a similar manner to the above, another single cell of the polymer electrolyte fuel cell was assembled by employing Powder No. 2, and a cell performance of the fuel cell was also examined.

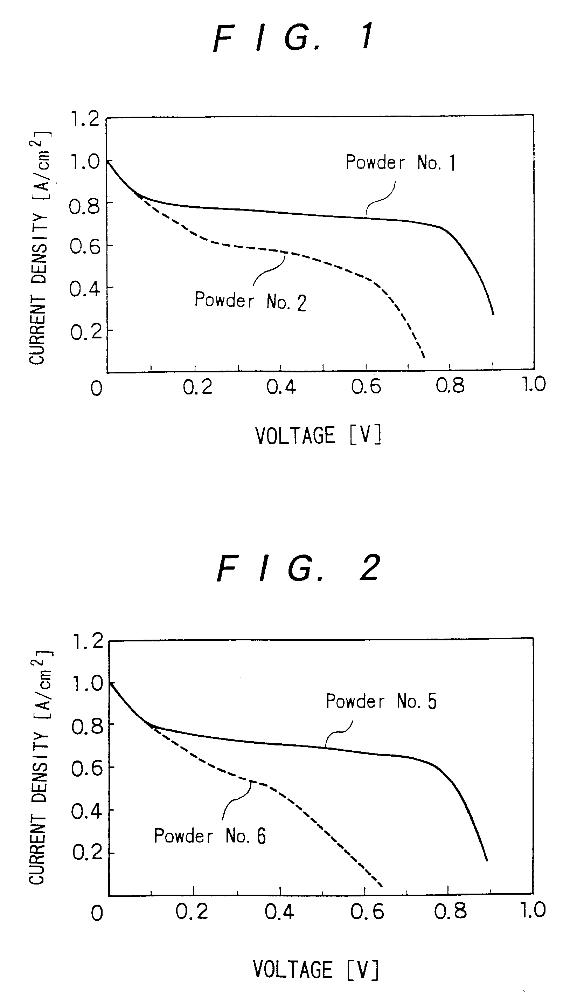

The results of the examination were shown in FIG. 1. As clearly shown in FIG. 1, it is appreciated that the fuel cell employing Powder No. 1 demonstrates a superior performance to that of the fuel cell employing Powder No. 2.

### EXAMPLE 2

In this example, various platinum catalysts are prepared by varying the pH value of the colloidal solution in a process similar to that of Example 1. The evaluations were conducted on the particle diameter of the obtained platinum catalysts and the performance of the fuel cell employing the platinum catalysts.

By adjusting the pH value of the colloidal solution to 3 - 13, respectively, the various platinum-carrying carbon catalyst powders were prepared. The particle diameters of the platinum catalyst carried on the respective catalyst powders were measured by the CO-adsorption method.

Single cells of the polymer electrolyte fuel cell were assembled using the obtained catalyst powders. Thus obtained fuel cells were examined in a manner similar to that of Example 1. Table 1 below summarizes the particle diameters of the platinum catalysts and the output voltages of the respective cells at a current density of 0.3 A/cm².

**TABLE 1**

| pH | Particle diameter of platinum catalyst (Å) | Output voltage (V) |
|---|---|---|
| 3 | 100 - 120 | 0.49 |
| 4 | 90 - 110 | 0.55 |
| 5 | 80 - 100 | 0.58 |
| 6 | 15 - 25 | 0.73 |
| 7 | 10 - 20 | 0.75 |
| 8 | 10 - 20 | 0.76 |
| 9 | 10 - 20 | 0.75 |
| 10 | 10 - 20 | 0.74 |
| 11 | 15 - 25 | 0.74 |
| 12 | 15 - 25 | 0.73 |
| 13 | 20 - 30 | 0.72 |

As shown by Table 1, platinum particles with small particle diameter can be obtained by adjusting the pH value of the colloidal solution to not less than 6, in particular by making it alkaline. In addition, the fuel cell employing the catalyst powder with such platinum particles exhibits high performance.

### EXAMPLE 3

An aqueous solution of platinum complex compound was prepared by dissolving 56 g of sodium hydrogen sulfite in 0.4 liters of an aqueous solution of chloroplatinic acid having a platinum concentration of 10 g/liter. The pH value of the obtained platinum complex compound aqueous solution was found to be about 2. The platinum complex compound aqueous solution was then diluted with water to give a total quantity of 1.5 liters. Thereafter, 0.4 liters of 31% aqueous solution of hydrogen peroxide was dropped into the diluted aqueous solution of platinum complex compound, thereby to prepare a colloidal solution of platinum oxide.

By adding an aqueous solution of sodium hydroxide to the colloidal solution thus obtained, its pH value was adjusted to 7, 7.5, 8 or 8.5. In this procedure, the colloidal solution adjusted to 7 turned turbid at the adjustment.

Separate from this, a carbon dispersion was prepared by dispersing 5 g of carbon powder which is the same as that used in Example 1 in 0.3 liters of water.

Each pH-adjusted colloidal solution was mixed with the carbon dispersion. The pH value of thus obtained mixtures were adjusted to 5, and then the mixtures were boiled by heating while stirring for 3 hours by adding a diluted sulfuric acid. After washing the powders obtained by filtering the thermally-treated mixtures, they were dried at 100°C for 24 hours, thereby to give platinum-carrying carbon catalyst powders.

Table 2 below summarizes the amount of the platinum carried on thus obtained platinum-carrying carbon catalyst powders and the particle diameters of the platinum catalysts.

**TABLE 2**

| pH | Amount of the carried platinum (wt%) | Particle diameter (Å) |
|---|---|---|
| 7 | 35 | 80 - 100 |
| 7.5 | 42 | 20 - 40 |
| 8 | 50 | 15 - 20 |
| 8.5 | 51 | 10 - 15 |

As clearly shown in Table 2, it is appreciated that the catalyst powders obtained by using the colloidal solution of the platinum oxide with the pH values of 7 or 7.5 have a small amount of carrying platinum and a large particle diameter of the platinum particles.

As a result of the examination of the performances of the fuel cells employing the obtained electrode catalysts, it is confirmed that the fuel cells employing the catalyst powders prepared with the colloidal solutions of the platinum oxide with the pH value of 7 or 7.5 demonstrate an inferior performance to the fuel cells employing the catalyst powders prepared with the colloidal solutions with the pH value of 8 or 8.5.

### EXAMPLE 4

An aqueous solution of platinum complex compound was prepared by dissolving 140 g of sodium hydrogen sulfite in 0.4 liters of an aqueous solution of chloroplatinic acid having a platinum concentration of 25 g/liter. The pH value of the obtained platinum complex compound aqueous solution was found to be about 1.5. The platinum complex compound aqueous solution was then diluted with water to give a total quantity of 1.5 liters. Thereafter, 1 liter of 31% aqueous solution of hydrogen peroxide was dropped into the platinum complex compound aqueous solution to form a colloidal solution of platinum oxide. Subsequently, the pH value of the obtained colloidal solution was adjusted to 7.5, by adding an aqueous solution of sodium hydroxide.

Separate from this, a carbon dispersion was prepared by dispersing 25 g of carbon powder which is the same as that used in Example 1 in 0.3 liters of water.

Then the carbon dispersion and the pH-adjusted colloidal solution were mixed each other.

Subsequently, the pH value of thus obtained mixture was adjusted to 5 by adding a diluted sulfuric acid, then the mixture was boiled by heating while stirring for 3 hours. After washing the powder obtained by filtering the thermally-treated mixture, it was dried at 100°C for 24 hours, thereby to give platinum-carrying carbon catalyst powder (hereinafter, referred to as "Powder No. 3").

The amount of the platinum carried on Powder No. 3 thus obtained was found to be 26 wt%. A measurement of the particle diameter of the platinum catalyst carried on Powder No. 3 by the CO-adsorption method resulted in 15 - 25 Å.

Another catalyst powder (hereinafter, referred to as "Powder No. 4") was prepared in a manner similar to the above-mentioned except for using a colloidal solution whose pH value had been adjusted to 5 after the formation of the colloidal particles. In this process, the colloidal solution turned turbid when its pH value was adjusted to 5.

The amount of the platinum carried on Powder No. 4 thus obtained was found to be 18 wt%. The particle diameter of the platinum catalyst was found to be 100 - 120 Å.

Next, single cells of the polymer electrolyte fuel cell were assembled employing the obtained Powders No. 3 and No. 4, respectively. Their cell performances were examined in a manner similar to that of Example 2.

As the results of the examination, it is appreciated that the cell employing Powder No. 3 demonstrates an output voltage of 0.74 V at a current density of 0.3 A/cm². In contrast to this, the output voltage of the cell configured by using Powder No. 4 is 0.48 V at a current density of 0.3 A/cm². That is, it is concluded that the cell employing Powder No. 3 demonstrates a superior performance to that of the cell employing Powder No. 4.

Based on the results in Examples 1 - 4, it can be confirmed that the cell performance is improved by increasing the pH value of the colloidal solution. Especially, when the platinum concentration of the aqueous solution for the colloidal solution is higher, further shifting the pH value to the alkaline side is effective to improve the cell performance.

### EXAMPLE 5

In this example, a description will be made on a process for carrying both the platinum particles and the ruthenium particles on the electrically-conductive carbon powder.

An aqueous solution of platinum complex compound was prepared by dissolving 14 g of sodium hydrogen sulfite in 0.4 liters of an aqueous solution of chloroplatinic acid having a platinum concentration of 2.5 g/liter. The pH value of the obtained aqueous solution was found to be about 2. The aqueous solution was then diluted with water to give a total quantity of 1 liter. Thereafter, 0.1 liters of 31% aqueous solution of hydrogen peroxide is dropped into the diluted solution to prepare a colloidal solution of platinum oxide.

Subsequently, the pH value of the colloidal solution was adjusted to 7 by adding an aqueous solution of sodium hydroxide. Further, 0.08 liters of an aqueous solution of ruthenium chloride with a concentration of 10 g/liter was dropped into this colloidal solution, thereby to form colloidal particles of ruthenium in the colloidal solution.

Separate from this, a carbon dispersion was prepared by dispersing 3 g of carbon powder which is the same as that used in Example 1 in 0.3 liters of water. The obtained carbon dispersion was added to the colloidal mixed solution. The pH value of the obtained mixture was then adjusted to 5, and the mixture was boiled by heating while stirring for 3 hours. After washing the powder obtained by filtering the thermally-treated mixture, it was dried at 100°C for 24 hours, thereby to give platinum and ruthenium-carrying carbon catalyst powder (hereinafter, referred to as "Powder No. 5").

The amounts of the platinum and ruthenium carried on Powder No. 5 was found to be 41 wt%.

Another carbon catalyst powder carrying the platinum and ruthenium (hereinafter, referred to as "Powder No. 6") was prepared in a manner similar to the above-mentioned except for using a colloidal solution which was adjusted to pH 5 after the formation of the colloidal platinum oxide. The amount of the platinum and ruthenium carried on Powder No. 6 thus obtained was found to be 34 wt%.

Next, single cells of the polymer electrolyte fuel cell were assembled using the obtained Powders No. 5 and No. 6, respectively. And their cell performances were examined using a hydrogen gas mixed with carbon monoxide at 20 ppm as the fuel gas and oxygen as the oxidizing gas for supplying to the fuel cell. The results of the examination were shown in FIG. 2.

As clearly shown in FIG. 2, it is appreciated that the cell employing Powder No. 5 demonstrates a superior cell performance to the cell employing Powder No. 6.

As previously-described, according to the present invention, it is possible to prepare an electrode catalyst powder carrying fine platinum particles in a high efficiency. In particular, it becomes possible to use an aqueous solution with a high platinum concentration for the preparation of the electrode catalyst powder in a large quantity.

It is understood that various other modifications will be apparent to and can be readily made by those skilled in the art without departing from the scope and spirit of this invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art to which this invention pertains.

## Claims

1. A method for producing electrode catalyst powder comprising the steps of:
adding an oxidizing agent to an aqueous solution of platinum complex compound, thereby to form a colloidal solution of an oxide of said platinum complex compound,
adjusting pH value of said colloidal solution to not less than 6, and
depositing the colloidal particles on an electrically-conductive carbon powder.

2. The method for producing electrode catalyst powder in accordance with claim 1, wherein said colloidal solution is made alkaline in the step of adjusting pH value of said colloidal solution to not less than 6.

3. The method for producing electrode catalyst powder according to claims 1 or 2, wherein said oxidizing agent is at least one member selected from the group consisting of hydrogen peroxide, potassium permanganate and a persulfate.

4. A method for producing electrode catalyst powder comprising the steps of:
adding an oxidizing agent to an aqueous solution of platinum complex compound, thereby to form a colloidal particles of an oxide of said platinum complex compound,
adjusting pH value of said colloidal solution to not less than 6,
adding an aqueous solution of ruthenium chloride to said colloidal solution, thereby to form colloidal particles of ruthenium therein, and
depositing said colloidal particles of the oxide of said platinum complex compound and said colloidal particles of ruthenium on an electrically-conductive carbon powder.

5. The method for producing electrode catalyst powder in accordance with claim 4, wherein said colloidal solution is made alkaline in the step of adjusting pH value of said colloidal solution to not less than 6.

6. The method for producing electrode catalyst powder in accordance with claim 4, wherein said oxidizing agent is at least one member selected from the group consisting of hydrogen peroxide, potassium permanganate and a persulfate.
